# EUROPÄISCHE PATENTSCHRIFT

(11) **EP 4 360 515 B1**
(45) Veröffentlichungstag und Bekanntmachung des Hinweises auf die Patenterteilung: **08.04.2026**
(21) Anmeldenummer: 23203843.0
(22) Anmeldetag: 16.10.2023
(51) Int. Cl.: A47J 31/52, A47J 31/60, B01D 35/143

(54) **VERFAHREN ZUM ÜBERWACHEN EINER BEFÜLLUNG EINES WASSERFILTERS IN EINEM GETRÄNKEAUTOMATEN**
METHOD FOR MONITORING A FILLING OF A WATER FILTER IN A BEVERAGE MACHINE
PROCÉDÉ DE SURVEILLANCE DU REMPLISSAGE D'UN FILTRE À EAU DANS UN DISTRIBUTEUR DE BOISSONS

(30) Priorität: 24.10.2022 DE 102022211257
(43) Veröffentlichungstag der Anmeldung: 01.05.2024
(73) Patentinhaber: BSH Hausgeräte GmbH, 81739 München (DE)
(72) Erfinder: Daburger, Josef, 83313 Siegsdorf (DE); Huber, Michael, 83349 Palling (DE); Frank, Theresa, 83236 Übersee (DE); Nerbl, Christian, 83512 Wasserburg am Inn (DE); Sollmann, Martin, 83278 Traunstein (DE); Botros, Peter, 83301 Traunreut (DE); Schattkowski, Luka, 83224 Grassau (DE); Fischer, Sebastian, 83022 Rosenheim (DE)

(56) Entgegenhaltungen:
- US-A1- 2015 150 294
- US-B2- 10 238 233
- US-B2- 11 147 414

## Beschreibung

Die vorliegende Erfindung betrifft ein Verfahren zum Überwachen einer Befüllung eines Wasserfilters in einem Getränkeautomaten. Die Erfindung betrifft ferner einen Getränkeautomaten mit einer Rechnereinrichtung zur Durchführung des Verfahrens sowie eine Anordnung mit einem solchen Getränkeautomaten und mit einem datenübertragbar damit verbundenen Server.

Getränkeautomaten, wie z.B. bekannt aus der US 11 147 414 B2, und insbesondere Kaffeevollautomaten können mit oder ohne eingebauten Wasserfiltern betrieben werden. Wird ein Wasserfilter in/an einem Wassertank verwendet, so ist dieser zwischen dem Wassertank und einer weiterführenden Wasserleitung eingebaut. In dieser Wasserleitung können zudem in Flussrichtung ein Tanksieb, ein Wasser-Durchflussmesser (Flowmeter) und eine Wasserpumpe, insbesondere eine wasserfördernde Schwingkolbenpumpe, angeordnet sein. Der Wasserfilter ist üblicherweise ein Kunststoffhohlkörper, der teilweise mit Granulat (Ionenaustauschperlen und/oder Aktivkohleperlen) zur Wasseraufbereitung gefüllt ist. Der Wasserfilter hat seinen Zulauf an der Unterseite und seinen Auslauf zentrisch innerhalb des Zulaufs, beides durch eine Kunststoffwand voneinander getrennt. Das heißt, das Wasser fließt im Betrieb von unten in den Wasserfilter nach oben durch das Granulat und dann wieder nach unten aus dem Wasserfilter hinaus. Aufgrund des beschriebenen Filteraufbaus und der Tatsache, dass der Wasserfilter im Neuzustand trocken ist, ist es zwingend erforderlich diesen bei der Inbetriebnahme mit Wasser zu füllen, indem man ihn beispielsweise mit dem Zu- und Auslauf nach oben gerichtet unter einen Wasserhahn hält oder in Wasser eintaucht und dabei mit den Händen komprimiert, so dass die Luft entweichen kann und der Wasserfilter am Ende möglichst vollständig mit Wasser gefüllt ist. Ein Verfahren gemäß der Präambel des Anspruchs 1 ist zudem aus der Druckschrift US 10,238,233 B2 bekannt.

Wird dies nicht oder nur unzureichend ausgeführt, so entstehen zwei mögliche Fehlerquellen im weiteren Betrieb. Zum einen kann der Wasser-Durchflussmesser keine zuverlässigen Signale übermitteln, wenn ihn größere Mengen Luft durchströmen, was von dem Getränkeautomaten als stagnierender Wasserfluss interpretiert wird und eine Fehlermeldung auslöst. Zum anderen kann die Wasserpumpe bei zu viel Luft nichts mehr fördern, da aufgrund der Ventiltechnik (Hysterese) komprimierbare Medien/Gase unzureichend bzw. unzuverlässig gefördert werden. Da kein Wasser- bzw. Medienfluss mehr stattfindet, sendet der Wasser-Durchflussmesser keine Signale mehr und die obige Fehlermeldung wird auslöst.

Eine solche Fehlermeldung kann beispielsweise lauten: "Kein kohlensäurehaltiges Wasser verwenden". Mit einer solchen Fehlermeldung kann ein Nutzer jedoch unter Umständen wenig anfangen. Baut der Nutzer den Wasserfilter aus und setzt keinen neuen Wasserfilter ein, so verschwindet zwar die Fehlermeldung, es besteht jedoch zumindest mittelfristig die Gefahr von Beschädigungen an dem Getränkeautomaten. Üblicherweise ruft der Nutzer deshalb eine Service-Hotline an, wodurch weiterer Aufwand entsteht oder sendet das Gerät sogar zum Kundendienst, wodurch weitere Kosten und weitere vermeidbare Reparaturfälle entstehen.

Es ist daher eine Aufgabe der vorliegenden Erfindung, ein Verfahren zum Überwachen einer Befüllung eines Wasserfilters in einem Getränkeautomaten anzugeben, mit welchem einem Nutzer beim Auftreten einer Fehlermeldung schnell und einfach Hilfe angeboten werden kann.

Diese Aufgabe wird erfindungsgemäß durch den Gegenstand der unabhängigen Patentansprüche gelöst. Vorteilhafte Ausführungsformen sind Gegenstand der abhängigen Patentansprüche.

Die vorliegende Erfindung beruht auf dem allgemeinen Gedanken, den eine Fehlermeldung auslösenden Befüllungszustand eines Wasserfilters in einem Getränkeautomaten zu überwachen und bei Auftreten einer solchen Fehlermeldung aufgrund eines nicht vollständig befüllten Wasserfilters dem Nutzer einen konkreten Hinweis zum Befüllen des Wasserfilters zu geben. Bei dem erfindungsgemäßen Verfahren zum Überwachen einer Befüllung eines Wasserfilters in einem eine Rechnereinrichtung, eine Erfassungseinrichtung, eine Anzeigeeinrichtung, einen Wasser-Durchflussmesser und eine Wasserpumpe aufweisenden Getränkeautomaten wird in einem Betriebszustand, insbesondere in einem Normalbetriebszustand, Wasser von der Wasserpumpe gefördert und fließt durch den Wasser-Durchflussmesser. Die Erfassungseinrichtung überwacht dabei den Wasserdurchfluss durch den Wasser-Durchflussmesser und/oder die Wasserfördermenge der Wasserpumpe und sendet ein erstes Signal an die Rechnereinrichtung, sofern der Wasser-Durchflussmesser einen Wasserdurchfluss misst, der unterhalb eines vordefinierten ersten Grenzwertes liegt. Zusätzlich oder alternativ sendet die Erfassungseinrichtung ein zweites Signal an die Rechnereinrichtung, sofern die Wasserpumpe eine Wasserfördermenge fördert, die unterhalb eines vordefinierten zweiten Grenzwertes liegt. Der erste und/oder der zweite Grenzwert sind dabei derart gewählt, dass sicher davon ausgegangen werden kann, dass bei deren Unterschreiten zu viel Luft im System vorhanden ist, woraus auf einen nicht oder nicht vollständig befüllten Wasserfilter geschlossen werden kann. Die Rechnereinrichtung prüft bei Erhalt des ersten Signals und/oder des zweiten Signals, ob ein Wasserfilter-Wechselprogramm gestartet wurde und über die Anzeigeeinrichtung eine Fehlermeldung angezeigt wird, und/oder ob über die Anzeigeeinrichtung eine Aufforderung zum Starten des Wasserfilter-Wechselprogramms angezeigt, dieses jedoch nicht gestartet, der Wasserfilter jedoch gewechselt wurde und über die Anzeigeeinrichtung die Fehlermeldung angezeigt wird. Dann erzeugt die Rechnereinrichtung nach dem Anzeigen der Fehlermeldung einen Hinweis, dass der Wasserfilter, insbesondere vor dem Einbau, mit Wasser befüllt werden muss. Mittels des erfindungsgemäßen Verfahrens ist es somit einfach möglich, einem Nutzer eine einfache Hilfestellung zu geben, mit der er sich selbst helfen kann, indem er den Wasserfilter Schritt für Schritt richtig wechselt und befüllt und so die Fehlermeldung behebt und Schäden am Getränkeautomaten vermeidet. Ein Kontaktieren der Service-Hotline oder ein Einschicken des Getränkeautomaten zum Kundendienst kann so im Idealfall vermieden werden, wodurch Reparaturfälle bzw. ein direkter Kundendienstkontakt über Hotline/Händler o.ä. reduziert werden können. Zugleich steigt die Kundenzufriedenheit, da sehr einfach ein zuverlässiger weiterer Betrieb sichergestellt werden kann. Zudem kann der Nutzer auch im Umgang mit dem Wasserfilter geschult werden, wodurch eine langfristig zuverlässige Handhabung des Wasserfilters gewährleistet werden kann. Hierdurch kann der Nutzer auch sensibilisiert werden, den Wasserfilter nach Erhalt der Fehlermeldung nicht nur zu entnehmen und keinen neuen einzusetzen.

Bei einer bevorzugten Ausführungsform gibt die Rechnereinrichtung den Hinweis über die Anzeigeeinrichtung aus. Hierdurch kann dem Nutzer beispielsweise ein optisch eindeutiger Hinweis genau an der Stelle angeboten werden, an der der Nutzer auch sonst Hinweise des Getränkeautomaten aufnimmt oder diesen bedient. Der Nutzer muss sich somit nicht umgewöhnen, was komfortabel ist.

Bei einer weiteren bevorzugten Ausführungsform übermittelt die Rechnereinrichtung den Hinweis über eine Kommunikationseinrichtung an einen Server oder an ein mobiles Gerät. Durch die Übermittlung des Hinweises an ein externes Gerät, beispielsweise einen Server oder ein Smartphone, ist es zudem möglich, beispielsweise mittels des Servers zentral mehrere Getränkeautomaten/Kaffeeautomaten zu verwalten und zu betreuen. Durch eine Übermittlung des Hinweises an ein mobiles Gerät, beispielsweise ein Tablet oder ein Smartphone, ist es möglich, einen Nutzer unabhängig von dem jeweiligen Gerätestandort über entsprechende Fehlermeldungen bzw. Hinweise zu informieren.

Bei einer weiteren vorteilhaften Ausführungsform des erfindungsgemäßen Verfahrens wertet der Server die Hinweise sämtlicher mit ihm kommunizierender Getränkeautomaten aus. Hierdurch können statistische Auswertungen erfolgen, mittels welchen die Getränkeautomaten hinsichtlich einer weiteren Entwicklung verbessert werden können. Zudem können systemische Fehler, insbesondere Produktionsfehler, detektiert und behoben werden, wodurch insgesamt die Qualität der Getränkeautomaten verbessert werden kann.

Bei einer besonders bevorzugten Ausführungsform des erfindungsgemäßen Verfahrens wird der Hinweis als Verweis zu einer Hilfeseite im Internet und/oder zu einem Anleitungsvideo ausgegeben. Hierdurch wird dem Nutzer direkt eine konkrete Hilfestellung geboten, beispielsweise über eine Hilfeseite im Internet oder ein "Erklär-Video". Derartige Videos, welche auf den jeweiligen Gerätetyp abgestimmt sind, können eine vergleichsweise einfache und leicht nacharbeitbare Schritt-für-Schritt Erklärung für das Befüllen bzw. den Austausch des Wasserfilters bereitstellen, wodurch nicht nur eine hohe Kundenzufriedenheit erreicht werden kann, da dem Nutzer bzw. Kunden die Möglichkeit gegeben wird, das auftretende Probleme selbst zu beheben, sondern auch ein Reparaturaufwand, bedingt beispielsweise durch ein Einsenden des Getränkeautomaten an einen Kundendienst, üblicherweise zumindest reduziert werden kann. Hierdurch lassen sich nicht nur die Reparaturfälle deutlich senken, sondern es kann darüber hinaus auch vermieden werden, dass der Nutzer zur Fehlerbehebung lediglich den Wasserfilter aus-, jedoch keinen neuen Wasserfilter einbaut.

Die vorliegende Erfindung beruht weiter auf dem allgemeinen Gedanken, einen Getränkeautomaten mit einem Wasserfilter, einer Erfassungseinrichtung, einer Anzeigeeinrichtung, einem Wasser-Durchflussmesser, einer Wasserpumpe und einer Rechnereinrichtung anzugeben, wobei die Rechnereinrichtung derart ausgebildet ist, dass sie das in den vorherigen Absätzen beschriebene Verfahren zum Überwachen einer Befüllung des Wasserfilters ausführen kann. Ein derartiger Getränkeautomat kann beispielsweise als Kaffeevollautomat ausgebildet sein. Derartige Kaffeevollautomaten stehen heutzutage auch verbreitet im sogenannten Consumer-Bereich, d. h. im privaten Bereich, in welchem eine verbesserte Hilfestellung bei eventuell auftretenden Fehlermeldungen einen besonders großen Vorteil bietet. Mit dem erfindungsgemäßen Getränkeautomaten ist es erstmals möglich, einem Nutzer desselben bei Auftreten einer durch einen nicht vollständig gefüllten Wasserfilter verursachten Fehlermeldung einen entsprechenden Hinweis anzuzeigen, dass der Wasserfilter vor dem Einbau vollständig mit Wasser befüllt werden muss. Hierdurch ist es einem Nutzer selbst ohne technische Kenntnisse möglich, einen Austausch des Wasserfilters selbsttätig vorzunehmen und nach dem Austausch des Wasserfilters den Getränkeautomaten auch wieder in Betrieb zu nehmen, ohne dass dabei die dann aufgrund eines zu geringen Füllstandes des Wasserfilters mit Wasser erzeugte Fehlermeldung zu einer Ratlosigkeit des Nutzers bzw. zu einem Reparaturfall, beispielsweise verbunden mit einem unnötigen Einsenden des Getränkeautomaten an einen Kundendienst oder das Anrufen einer Service-Hotline, führt. Mit dem erfindungsgemäßen Getränkeautomaten kann bei dem jeweiligen Nutzer zudem eine erhöhte Kundenzufriedenheit erreicht werden, da er durch das von der Rechnereinrichtung ausgeführte erfindungsgemäße Verfahren selbst in der Lage ist, durch Beachten des Hinweises die Fehlermeldung zu beheben. Ein derartiges Selbstlösen von Problemen erhöht zudem den Kundenbezug zum jeweiligen Getränkeautomaten.

Die Erfindung betrifft ferner ein Computerprogrammprodukt, welches durch ein Computersystem auslesbare Anweisungen enthält, derart, dass das Computersystem beim Ausführen des Computerprogrammprodukts das voranstehend vorgestellte, erfindungsgemäße Verfahren ausführt. Die voranstehend erläuterten Vorteile des erfindungsgemäßen Verfahren gelten somit auch für das erfindungsgemäße Computerprogrammprodukt.

Die vorliegende Erfindung betrifft ferner eine Anordnung mit einem entsprechend den vorherigen Absätzen beschriebenen Getränkeautomaten sowie mit einem Server, der datenübertragend mit dem Getränkeautomaten verbunden ist, sodass Daten betreffend die Befüllung des Wasserfilters zwischen dem Getränkeautomaten und dem Server ausgetauscht werden können. Eine derartige Anordnung bietet den großen Vorteil, dass bei individuellen Getränkeautomaten auftretende Fehlermeldungen zentral im Server gespeichert bzw. verarbeitet werden können, wodurch insbesondere auch systemische Fehler durch eine statistische Auswertung leichter erkennbar und dadurch behebbar sind. Dabei ist es möglich, dass die erfindungsgemäße Anordnung zudem ein mobiles Gerät, beispielsweise ein Smartphone, umfasst, welches datenübertragend mit dem Getränkeautomaten und/oder dem Server verbunden ist, sodass auch auf diesem mobilen Gerät der von der Rechnereinrichtung des Getränkeautomaten erzeugte Hinweis angezeigt werden kann.

Generell ist dabei auch denkbar, dass das erfindungsgemäße Verfahren bzw. das erfindungsgemäße Computerprogrammprodukt nicht in dem Getränkeautomaten selbst, sondern in dem zuvor beschriebenen mobilen Gerät, beispielsweise dem Smartphone oder dem Tablet, ausgeführt wird. Auch eine Ausführung des erfindungsgemäßen Verfahrens im Server ist denkbar, wodurch eine zentrale Wartung und eine deutlich erleichterte Aktualisierung des jeweiligen Computerprogrammprodukts im Server erfolgen kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch:
- Fig. 1: eine erfindungsgemäße Anordnung mit einem erfindungsgemäßen Getränkeautomaten,
- Fig. 2: ein Flussdiagramm zur Verdeutlichung eines erfindungsgemäßen Verfahrens zum Überwachen einer Befüllung eines Wasserfilters.

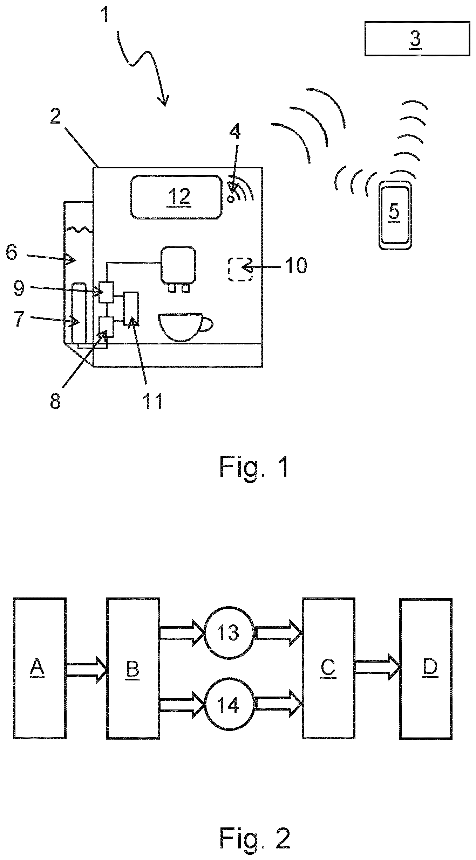

Entsprechend der Fig. 1, weist eine erfindungsgemäße Anordnung 1 einen erfindungsgemäßen Getränkeautomaten 2 sowie einen Server 3 auf, der datenübertragbar bzw. datenübertragend mit dem Getränkeautomaten 2 bzw. mit einer Kommunikationseinrichtung 4 verbunden ist. Die Kommunikationseinrichtung 4 kann dabei beispielsweise als WLAN-Modul ausgebildet sein. Ebenfalls kann die erfindungsgemäße Anordnung 1 noch ein mobiles Gerät 5 aufweisen, beispielsweise ein Smartphone oder ein Tablet.

Der erfindungsmäße Getränkeautomat 2, der beispielsweise als Kaffeevollautomat ausgebildet sein kann, besitzt einen Wassertank 6, einen Wasserfilter 7, einen Wasser-, Durchflussmesser 8, eine Wasserpumpe 9, eine Rechnereinrichtung 10 sowie eine Erfassungseinrichtung 11 und eine Anzeigeneinrichtung 12. Über die Rechnereinrichtung 10 kann dabei das entsprechend der Fig. 2 dargestellte erfindungsgemäße Verfahren zum Überwachen einer Befüllung des Wasserfilters 7 erfolgen.

Generell kann der erfindungsgemäße Getränkeautomat 2 mit oder ohne Wasserfilter 7 betrieben werden, wobei ein Betrieb ohne Wasserfilter 7 langfristig zu Schäden an dem Getränkeautomaten 2 führen kann und deshalb vermieden werden sollte.

Der Wasserfilter 7 ist beispielsweise ein Kunststoffhohlkörper, der teilweise mit Granulat (Ionenaustauscherperlen und Aktivkohleperlen) zur Wasseraufbereitung gefüllt ist. Der Wasserfilter 7 hat seinen Zulauf an der Unterseite und seinen Auslauf exzentrisch innerhalb des Zulaufs, beides durch eine Kunststoffwand voneinander getrennt. Das heißt, das Wasser fließt im Betrieb von unten in den Wasserfilter 7 nach oben durch das Granulat und dann wieder nach unten aus dem Wasserfilter 7 heraus. Aufgrund eines derartigen Aufbaus des Wasserfilters 7 und der Tatsache, dass der Wasserfilter 7 im Neuzustand trocken ist, ist es erforderlich, den Wasserfilter 7 bei Inbetriebnahme nach einem Austausch mit Wasser zu befüllen, indem man ihn beispielsweise mit dem Zu- und Auslauf nach oben gerichtet unter einen Wasserhahn hält oder in Wasser eintaucht und dabei komprimiert, sodass Luft entweichen und Wasser einfließen kann und der Wasserfilter 7 am Ende möglichst vollständig mit Wasser gefüllt ist. Wird diese Prozedur unvollständig ausgeführt, so kann es beispielsweise dazu kommen, dass der Wasser-Durchflussmesser 8 keinen Durchfluss misst bzw. die Wasserpumpe 9 lediglich Luft und kein Wasser fördert und hierdurch Fehlermeldungen erzeugt werden.

Das in Fig. 2 beschriebene erfindungsgemäße Verfahren soll dabei einem Nutzer eine Hilfestellung zur eigenständigen Behebung dieser beschriebenen Fehlerquelle ermöglichen.

Im Betriebszustand wird Wasser von der Wasserpumpe 9 gefördert und fließt durch den Wasser-Durchflussmesser 8, was in dem Flussdiagramm gemäß der Fig. 2 mit dem Verfahrensschritt A bezeichnet ist. Hier beginnt das erfindungsgemäßen Verfahren.

Im Verfahrensschritt B erfasst nun die Erfassungseinrichtung 11 den Wasserdurchfluss durch den Wasser-Durchflussmesser 8 und/oder eine Wasserfördermenge der Wasserpumpe 9 und sendet ein erstes Signal 13 an die Rechnereinrichtung 10, sofern der Wasser-Durchflussmesser 8 einen Wasserdurchfluss misst, der unterhalb eines vordefinierten ersten Grenzwertes liegt und dadurch auf Luft im System hinweist. Zusätzlich oder alternativ sendet die Erfassungseinrichtung 11 ein zweites Signal 14 an die Rechnereinrichtung 10, sofern die Wasserpumpe 9 eine Wasserfördermenge fördert, die unterhalb eines vordefinierten zweiten Grenzwertes liegt, was ebenfalls darauf hindeutet, dass die Wasserpumpe 9 ebenfalls zumindest teilweise Luft fördert.

Die Rechnereinrichtung 10 prüft bei Erhalt des ersten Signals 13 und/oder des zweiten Signals 14 im Verfahrensschritt C, ob ein Wasserfilter-Wechselprogramm gestartet wurde und ob über die Anzeigeeinrichtung 12 eine Fehlermeldung angezeigt wird. Zusätzlich oder alternativ prüft die Rechnereinrichtung 10 im Verfahrensschritt C bei Erhalt des ersten Signals 13 und/oder des zweiten Signals 14, ob die Anzeigeneinrichtung 12 eine Aufforderung zum Starten des Wasserfilter-Wechselprogramms anzeigt, dieses jedoch nicht gestartet, aber der Wasserfilter 7 gewechselt wurde und über die Anzeigeeinrichtung 12 die Fehlermeldung angezeigt wird. Im Verfahrensschritt D erzeugt die Rechnereinrichtung 10 nach dem Anzeigen der Fehlermeldung einen Hinweis, dass der Wasserfilter 7 vor dem Einbau mit Wasser befüllt werden muss.

Die Rechnereinrichtung 10 kann dabei den Hinweis über die Anzeigeneinrichtung 12, beispielsweise schriftlich oder akustisch ausgeben. Zusätzlich oder alternativ ist auch denkbar, dass die Rechnereinrichtung 10 den Hinweis über die Kommunikationseinrichtung 4 an den Server 3 und/oder an das mobile Gerät 5, insbesondere ein Smartphone, übermittelt.

Mit dem erfindungsgemäßen Verfahren ist es somit vergleichsweise einfach möglich, einem Nutzer eine Anleitung an die Hand zu geben, mit der er sich selbst helfen kann, indem er den Wasserfilter 7 Schritt für Schritt richtig wechselt und befüllt und so die Fehlermeldung behebt und insbesondere Schäden am Getränkeautomaten 2 vermeidet. Zudem entfällt hierdurch ein Kontaktieren einer Service-Hotline bzw. ein Einschicken des Getränkeautomaten 2 zum Kundendienst, wodurch Reparaturfälle reduziert werden können. Da dem Nutzer nicht nur eine Anleitung, sondern bei richtiger Befolgung der Anleitung auch ein Reparaturerfolg angeboten werden können, kann zudem die Kundenzufriedenheit gesteigert werden. Von besonderem Vorteil des erfindungsgemäßen Verfahrens ist darüber hinaus, dass ein weiterer Betrieb des Getränkeautomaten 2 ohne Wasserfilter 7, der gegebenenfalls zu Schäden führen kann, vermieden werden kann.

Gemäß der Fig. 1 ist dabei lediglich ein einziger Getränkeautomat 2 dargestellt, wobei selbstverständlich denkbar ist, dass der Server 3 mit einer Vielzahl derartiger Getränkeautomaten 2 kommunizierend verbunden und dadurch in der Lage sein kann, die Hinweise sämtlicher mit ihm kommunizierend verbundener Getränkeautomaten 2 auszuwerten. Hierdurch können beispielsweise ein Produktionsfehler bzw. generell ein systemischer Fehler leichter detektiert und entsprechende Gegenmaßnahmen ergriffen werden.

Der dem Nutzer nach dem Anzeigen der Fehlermeldung gegebene Hinweis kann beispielsweise als Verweis zu einer Hilfeseite im Internet und/oder zu einem Anleitungsvideo ausgegeben werden. Hierdurch ist es möglich, dem Nutzer eine einfache optische und akustische Schritt-für-Schritt Erklärung zum richtigen Befüllen des Wasserfilters 7 anzubieten.

Das erfindungsgemäße Verfahren kann technisch in Form eines Computerprogramm-Produkts ausgeführt sein, welches beispielsweise von der Rechnereinrichtung 10 auslesbare bzw. ausführbare Anweisungen erhält, sodass die Rechnereinrichtung 10 beim Ausführen des Computerprogramm-Produkts das vorstehend beschriebene erfindungsgemäße Verfahren ausführt. Das erfindungsgemäße ComputerprogrammProdukt kann dabei in dem Getränkeautomaten 2 bzw. dessen Rechnereinrichtung 10 ausgeführt werden oder alternativ in dem mobilen Gerät 5 bzw. dem Server 3.

## Patentansprüche

1. Verfahren zum Überwachen einer Befüllung eines Wasserfilters (7) in einem eine Rechnereinrichtung (10), eine Erfassungseinrichtung (11), eine Anzeigeeinrichtung (12), einen Wasser-Durchflussmesser (8) und eine Wasserpumpe (9) aufweisenden Getränkeautomat (2), bei dem
- Wasser von der Wasserpumpe (9) gefördert wird und durch den Wasser-Durchflussmesser (8) fließt,
- die Erfassungseinrichtung (11) den Wasserdurchfluss durch den Wasser-Durchflussmesser (8) und/oder eine Wasserfördermenge der Wasserpumpe (9) erfasst und ein erstes Signal (13) an die Rechnereinrichtung (10) sendet, sofern der Wasser-Durchflussmesser (8) einen Wasserdurchfluss misst, der unterhalb eines vordefinierten ersten Grenzwertes liegt und/oder ein zweites Signal (14) an die Rechnereinrichtung (10) sendet, sofern die Wasserpumpe (9) eine Fördermenge an Wasser fördert, die unterhalb eines vordefinierten zweiten Grenzwertes liegt, **gekennzeichnet durch** die weiteren Schritte, gemäß derer
- die Rechnereinrichtung (10) bei Erhalt des ersten Signals (13) und/oder des zweiten Signals (14) prüft, ob ein Wasserfilter-Wechselprogramm gestartet wurde und über die Anzeigeeinrichtung (12) eine Fehlermeldung angezeigt wird, und/oder die Rechnereinrichtung (10) bei Erhalt des ersten Signals (13) und/oder des zweiten Signals (14) prüft, ob über die Anzeigeeinrichtung (12) eine Aufforderung zum Starten des Wasserfilter-Wechselprogramms angezeigt, dieses jedoch nicht gestartet aber der Wasserfilter (7) gewechselt wurde und über die Anzeigeeinrichtung (12) die Fehlermeldung angezeigt wird,
- die Rechnereinrichtung (10) nach dem Anzeigen der Fehlermeldung einen Hinweis erzeugt, dass der Wasserfilter (7) vor dem Einbau mit Wasser befüllt werden muss.

2. Verfahren nach Anspruch 1,
**dadurch gekennzeichnet,**
**dass** die Rechnereinrichtung (10) den Hinweis über die Anzeigeeinrichtung (12) ausgibt.

3. Verfahren nach Anspruch 1 oder 2,
**dadurch gekennzeichnet,**
**dass** die Rechnereinrichtung (10) den Hinweis über eine Kommunikationseinrichtung (4) an einen Server (3) oder an ein mobiles Gerät (5) übermittelt.

4. Verfahren nach Anspruch 3,
**dadurch gekennzeichnet,**
**dass** der Server (3) die Hinweise sämtlicher mit ihm kommunizierender Getränkeautomaten (1) auswertet.

5. Verfahren nach einem der vorhergehenden Ansprüche,
**dadurch gekennzeichnet,**
**dass** der Hinweis als Verweis zu einer Hilfeseite im Internet und/oder zu einem Anleitungsvideo ausgegeben wird.

6. Getränkeautomat (2) mit einem Wasserfilter (7), einer Erfassungseinrichtung (11), einer Anzeigeeinrichtung (12), einem Wasser-Durchflussmesser (8), einer Wasserpumpe (9) und einer Rechnereinrichtung (10), die derart ausgebildet ist, dass sie den Getränkeautomaten (2) das Verfahren zum Überwachen einer Befüllung des Wasserfilters (7) nach einem der vorhergehenden Ansprüche ausführen lassen kann.

7. Getränkeautomat nach Anspruch 6,
**dadurch gekennzeichnet,**
**dass** der Getränkeautomat (2) als Kaffeevollautomat ausgebildet ist.

8. Getränkeautomat nach Anspruch 6 oder 7,
**dadurch gekennzeichnet,**
**dass** der Getränkeautomat (2) eine als WLAN-Modul ausgebildete Kommunikationseinrichtung (4) aufweist.

9. Computerprogrammprodukt, welches durch ein Computersystem auslesbare Anweisungen enthält, derart, dass das Computersystem beim Ausführen des Computerprogrammprodukts einen Getränkeautomaten nach einem der Ansprüche 6-8 ein Verfahren nach einem der Ansprüche 1 bis 5 ausführen lässt

10. Anordnung (1),
- mit einem Getränkeautomaten (2) nach Anspruch 6 oder 7,
- mit einem Server (3), der datenübertragbar oder datenübertragend mit dem Getränkeautomaten (2) verbunden ist, so dass Daten betreffend die Befüllung des Wasserfilters (7) mit Wasser zwischen dem Getränkeautomaten (2) und dem Server (3) ausgetauscht werden.

## Claims

1. Method for monitoring a filling of a water filter (7) in an automatic beverage machine (2) having a computer facility (10), a capture facility (11), a display facility (12), a water flowmeter (8) and a water pump (9), in which
- water is conveyed by the water pump (9) and flows through the water flowmeter (8),
- the capture facility (11) captures the water flow rate through the water flowmeter (8) and/or an amount of water conveyed by the water pump (9) and transmits a first signal (13) to the computer facility (10), provided that the water flowmeter (8) measures a water flow rate that lies below a predefined first limit value, and/or transmits a second signal (14) to the computer facility (10), provided that the water pump (9) conveys a conveyed amount of water that lies below a predefined second limit value,
**characterised by** the further steps, according to which
- on receipt of the first signal (13) and/or the second signal (14), the computer facility (10) checks whether a water filter swap program has been started and an error message is displayed via the display facility (12), and/or on receipt of the first signal (13) and/or the second signal (14), the computer facility (10) checks whether a request to start the water filter swap program has been displayed via the display facility (12), but it has not been started but the water filter (7) has been swapped, and the error message is displayed via the display facility (12),
- after the error message has been displayed, the computer facility (10) generates a notice that the water filter (7) must be filled with water before installation.

2. Method according to claim 1,
**characterised in that**
the computer facility (10) outputs the notice via the display facility (12).

3. Method according to claim 1 or 2,
**characterised in that**
the computer facility (10) transmits the notice to a server (3) or to a mobile device (5) via a communication facility (4).

4. Method according to claim 3,
**characterised in that**
the server (3) evaluates the notices of all automatic beverage machines (1) that communicate with it.

5. Method according to one of the preceding claims,
**characterised in that**
the notice is output as a link to a help page on the Internet and/or to an instruction video.

6. Automatic beverage machine (2) with a water filter (7), a capture facility (11), a display facility (12), a water flowmeter (8), a water pump (9) and a computer facility (10), which is embodied in such a manner that it can make the automatic beverage machine (2) carry out the method for monitoring a filling of the water filter (7) according to one of the preceding claims.

7. Automatic beverage machine according to claim 6,
**characterised in that**
the automatic beverage machine (2) is embodied as a fully automatic coffee machine.

8. Automatic beverage machine according to claim 6 or 7,
**characterised in that**
the automatic beverage machine (2) has a communication facility (4) that is embodied as a WLAN module.

9. Computer program product, which contains instructions that can be read by a computer system, in such a manner that when the computer program product is executed the computer system makes an automatic beverage machine according to one of claims 6-8 carry out a method according to one of claims 1 to 5.

10. Arrangement (1),
- with an automatic beverage machine (2) according to claim 6 or 7,
- with a server (3), which is connected to the automatic beverage machine (2) such that it can transfer data or transfers data, meaning that data relating to the filling of the water filter (7) with water is exchanged between the automatic beverage machine (2) and the server (3).

## Revendications

1. Procédé pour la surveillance d'un remplissage d'un filtre à eau (7) dans un distributeur automatique de boissons (2) comprenant un dispositif de calcul (10), un dispositif de détection (11), un dispositif d'affichage (12), un débitmètre d'eau (8) et une pompe à eau (9), dans lequel
- l'eau est transportée par la pompe à eau (9) et s'écoule à travers le débitmètre d'eau (8),
- le dispositif de détection (11) détecte le débit d'eau à travers le débitmètre d'eau (8) et/ou un débit d'eau de la pompe à eau (9) et envoie un premier signal (13) au dispositif de calcul (10) pour autant que le débitmètre d'eau (8) mesure un débit d'eau inférieur à une première valeur limite prédéfinie et/ou envoie un deuxième signal (14) au dispositif de calcul (10) pour autant que la pompe à eau (9) fournisse un débit d'eau inférieur à une deuxième valeur limite prédéfinie, **caractérisé par** les étapes supplémentaires, conformément auxquelles
- le dispositif de calcul (10) vérifie, à la réception du premier signal (13) et/ou du deuxième signal (14), si un programme de remplacement du filtre à eau a été lancé et si un message d'erreur s'affiche via le dispositif d'affichage (12), et/ou le dispositif de calcul (10) vérifie, à la réception du premier signal (13) et/ou du deuxième signal (14), si une demande de démarrage du programme de remplacement du filtre à eau s'affiche via le dispositif d'affichage (12), que celui-ci n'a toutefois pas été démarré mais que le filtre à eau (7) a été remplacé et que le message d'erreur s'affiche via le dispositif d'affichage (12),
- après l'affichage du message d'erreur, le dispositif de calcul (10) génère une indication selon laquelle le filtre à eau (7) doit être rempli d'eau avant installation.

2. Procédé selon la revendication 1, **caractérisé en ce que** le dispositif de calcul (10) émet l'indication via le dispositif d'affichage (12).

3. Procédé selon la revendication 1 ou 2, **caractérisé en ce que** le dispositif de calcul (10) transmet l'indication à un serveur (3) ou à un appareil mobile (5) via un dispositif de communication (4).

4. Procédé selon la revendication 3, **caractérisé en ce que** le serveur (3) évalue les indications de l'ensemble des distributeurs automatiques de boissons (1) qui communiquent avec lui.

5. Procédé selon l'une des revendications précédentes, **caractérisé en ce que** l'indication est émise sous forme de renvoi vers une page d'aide sur Internet et/ou vers une vidéo explicative.

6. Distributeur automatique de boissons (2) avec un filtre à eau (7), un dispositif de détection (11), un dispositif d'affichage (12), un débitmètre d'eau (8), une pompe à eau (9) et un dispositif de calcul (10) formé de sorte qu'il puisse faire exécuter au distributeur automatique de boissons (2) le procédé de surveillance d'un remplissage du filtre à eau (7) selon l'une des revendications précédentes.

7. Distributeur automatique de boissons selon la revendication 6, **caractérisé en ce que** le distributeur automatique de boissons (2) est formé sous la forme d'une machine à café intégralement automatique.

8. Distributeur automatique de boissons selon la revendication 6 ou 7, **caractérisé en ce que** le distributeur automatique de boissons (2) présente un dispositif de communication (4) formé sous la forme d'un module WI-FI.

9. Produit de programme informatique contenant des instructions lisibles par un système informatique, de sorte que, lors de l'exécution du produit de programme informatique, le système informatique fait exécuter à un distributeur automatique de boissons selon l'une des revendications 6 à 8 un procédé selon l'une des revendications 1 à 5.

10. Agencement (1),
- avec un distributeur automatique de boissons (2) selon la revendication 6 ou 7,
- avec un serveur (3) qui est relié au distributeur automatique de boissons (2), apte à transmettre des données ou transmettant des données, de sorte que des données concernant le remplissage du filtre à eau (7) en eau puissent être échangées entre le distributeur automatique de boissons (2) et le serveur (3).
